# FASCICULE DE BREVET EUROPEEN

(11) **EP 3 510 682 B1**
(45) Date de publication et mention de la délivrance du brevet: **19.08.2020**
(21) Numéro de dépôt: 17771490.4
(22) Date de dépôt: 06.09.2017
(51) Int. Cl.: H02J 1/10, H02J 1/14, H02J 4/00, H02J 3/38

(54) **CIRCUIT DE TRANSMISSION D'ÉNERGIE ÉLECTRIQUE**
STROMÜBERTRAGUNGSSCHALTUNG
ELECTRIC ENERGY TRANSMISSION CIRCUIT

(30) Priorité: 07.09.2016 FR 1658299
(43) Date de publication de la demande: 17.07.2019
(73) Titulaire: Commissariat à l'énergie atomique et aux énergies alternatives, 75015 Paris (FR); Safran, 75015 Paris (FR)
(72) Inventeur: SIBEUD, Loïc, 38000 Grenoble (FR); GREZAUD, Romain, 38360 Sassenage (FR)
(74) Mandataire: Cabinet Beaumont
(86) Numéro de dépôt international: PCT/FR2017/052364
(87) Numéro de publication internationale: WO 2018/046848

(56) Documents cités:
- US-A- 5 536 976
- US-A1- 2002 046 354
- US-A1- 2013 007 515
- US-A1- 2013 147 274

## Description

La présente demande de brevet revendique la priorité de la demande de brevet français FR16/58299.

### Domaine

La présente demande concerne un système électronique ou électromécanique selon le préambule de la revendication 1.

### Exposé de l'art antérieur

Un système électronique ou électromécanique autonome comprend une source d'énergie électrique et au moins un circuit applicatif alimenté à partir de l'énergie électrique fournie par la source d'énergie. Le système comprend généralement un circuit de transmission d'énergie électrique qui reçoit l'énergie électrique fournie par la source d'énergie électrique et fournit cette énergie électrique sous une forme, notamment un niveau de tension, qui est adaptée pour l'alimentation du circuit applicatif.

Pour certaines applications, il est souhaitable que la source d'énergie électrique corresponde à un dispositif de récolte d'énergie ambiante, adapté à extraire et à convertir en énergie électrique une ou plusieurs formes d'énergie présentes dans l'environnement, par exemple de l'énergie thermique, vibratoire, solaire, éolienne, ou radiofréquence. Comme la puissance électrique instantanée fournie par une telle source d'énergie électrique peut ne pas être constante dans le temps, il est connu que le circuit de transmission comprenne un supercondensateur ou une batterie d'accumulateurs rechargeables pour stocker temporairement l'énergie électrique fournie par la source d'énergie et permettre de continuer l'alimentation du circuit applicatif même lorsque la puissance électrique instantanée consommée par le circuit applicatif est inférieure à la puissance électrique instantanée fournie par la source d'énergie.

Toutefois, l'utilisation d'un supercondensateur ou d'une batterie d'accumulateurs présente des inconvénients. En effet, la part de la batterie d'accumulateurs/du supercondensateur dans le coût de fabrication et le poids du système électrique ou électromécanique peut être élevée. En outre, la température de fonctionnement maximale du système électrique ou électromécanique est généralement limitée par la température de fonctionnement maximale de la batterie d'accumulateurs/du supercondensateur. De plus, la durée de vie et la fiabilité du système électrique ou électromécanique sont généralement limitées par ceux de la batterie d'accumulateurs/du supercondensateur.

Les documents US2013/007515, US2013/147274, US 2002/046354 et US5536976 portent sur des systèmes électroniques ou électromécaniques comprenant une source d'énergie électrique et un circuit applicatif consommant ladite énergie électrique.

### Résumé

Un objet d'un mode de réalisation est de pallier tout ou partie des inconvénients des systèmes électriques ou électromécaniques autonomes décrits précédemment.

Un autre objet d'un mode de réalisation est que le système électrique ou électromécanique ne comprend pas de batterie d'accumulateurs ou de supercondensateur.

Un autre objet d'un mode de réalisation est que le coût de fabrication du système électrique ou électromécanique est réduit.

Un autre objet d'un mode de réalisation est que le poids du système électrique ou électromécanique est réduit.

Un autre objet d'un mode de réalisation est que la température maximale de fonctionnement du système électrique ou électromécanique est supérieure strictement aux températures maximales généralement autorisées par les batteries d'accumulateurs/les supercondensateurs disponibles dans le commerce.

Un autre objet d'un mode de réalisation est que la durée de vie du système électrique ou électromécanique est augmentée.

Un autre objet d'un mode de réalisation est que la fiabilité du système électrique ou électromécanique est augmentée.

Ainsi, selon la présente invention, il est proposé un système électronique ou électromécanique comprenant au moins une source d'énergie électrique, un premier circuit adapté à fonctionner dans au moins deux modes de fonctionnement dont l'un correspond à l'arrêt du circuit applicatif, et un circuit de transmission de l'énergie électrique de la source d'énergie au circuit applicatif, le circuit de transmission étant, en outre, adapté à déterminer une première valeur de la puissance électrique instantanée maximale susceptible d'être fournie par la source d'énergie, à déterminer une deuxième valeur de la puissance électrique instantanée consommée par le circuit applicatif dans au moins l'un des modes de fonctionnement et à stocker les première et deuxième valeurs ou à sélectionner le mode de fonctionnement du circuit applicatif parmi lesdits au moins deux modes de fonctionnement à partir des première et deuxième valeurs.

Selon la présente invention, le circuit de transmission comprend un circuit de régulation de tension adapté à recevoir une première tension fournie par la source d'énergie, ou par un circuit de conversion de puissance interposé entre la source d'énergie et le circuit de transmission, et adapté à fournir une deuxième tension régulée à une tension de référence alimentant le premier circuit.

Selon un mode de réalisation, le circuit de régulation de tension est un régulateur de tension à faible chute de tension.

Selon un mode de réalisation, le circuit applicatif est adapté à fonctionner selon une succession de modes de fonctionnement, la consommation électrique du circuit applicatif dans l'un des modes de fonctionnement de ladite succession étant strictement supérieure à la consommation électrique du circuit applicatif dans le mode de fonctionnement suivant de ladite succession, le circuit de transmission étant, en outre, adapté à commander le fonctionnement du circuit applicatif dans le mode de fonctionnement précédant dans ladite succession lorsque la première valeur est inférieure strictement à la deuxième valeur.

Selon un mode de réalisation, le circuit de transmission comprend un circuit de puits de courant adapté à tirer un premier courant d'intensité croissante.

Selon la présente invention, la source d'énergie est reliée au circuit de transmission par une première ligne de transmission. Le circuit de transmission est relié au circuit applicatif par une deuxième ligne de transmission. Le circuit de puits de courant est adapté à tirer le premier courant d'intensité croissante depuis la première ligne de transmission et le circuit de transmission comprend un circuit de détermination de l'intensité maximale du premier courant pour laquelle la deuxième tension n'est plus régulée.

Selon un mode de réalisation, le circuit de transmission est adapté à déterminer la première valeur comme le produit de la tension de référence par l'intensité maximale.

Selon un mode de réalisation, le circuit applicatif est adapté à recevoir un deuxième courant et le circuit de transmission comprend un circuit de recopie adapté à fournir un troisième courant égal au deuxième courant multiplié par un facteur de recopie.

Selon un mode de réalisation, le circuit de transmission comprend un circuit adapté à fournir un quatrième courant égal à la différence entre le troisième courant et le premier courant et un circuit de détection d'une inversion du sens du quatrième courant.

Selon un mode de réalisation, le circuit de transmission est adapté à déterminer la deuxième valeur comme le produit du facteur de recopie, de la tension de référence et de l'intensité du premier courant pour laquelle le sens du quatrième courant est inversé.

Selon un mode de réalisation, la source d'énergie électrique est un dispositif de conversion en énergie électrique d'une énergie choisie parmi le groupe comprenant l'énergie thermique, l'énergie vibratoire, l'énergie solaire, l'énergie éolienne et l'énergie radiofréquence.

Selon un mode de réalisation, le système ne comprend pas de dispositif de stockage d'énergie ayant une capacité supérieure à 100 µF.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1 et 2 représentent, de façon partielle et schématique, des modes de réalisation d'un système électronique ou électromécanique autonome ;
la figure 3 représente un mode de réalisation du circuit de transmission du système électronique ou électromécanique de la figure 2 ;
la figure 4 représente, de façon plus détaillée, un mode de réalisation d'éléments du circuit de transmission de la figure 3 ;
les figures 5 et 6 sont des chronogrammes de signaux du circuit de transmission de la figure 3 à deux phases de fonctionnement ;
les figures 7 et 8 sont des diagrammes d'états et de transitions de deux modes de réalisation d'un procédé de fonctionnement du circuit de transmission de la figure 3 ;
la figure 9 représente, de façon partielle et schématique, un autre mode de réalisation du circuit de transmission du système électronique ou électromécanique autonome ; et
la figure 10 représente un autre mode de réalisation du module de régulation de tension du système électronique ou électromécanique.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, les sources d'énergie électrique adaptées à extraire et à convertir en énergie électrique une ou plusieurs formes d'énergie présentes dans l'environnement sont bien connues de l'homme du métier et ne sont pas décrites en détail par la suite. Sauf précision contraire, les expressions "approximativement", "sensiblement", et "de l'ordre de" signifient à 10 % près, de préférence à 5 % près.

Dans la suite de la description, on appelle "bornes de puissance" d'un transistor MOS la source et le drain du transistor MOS. De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas. Par ailleurs, dans la présente description, on utilise le terme "connecté" pour désigner une liaison électrique directe, sans composant électronique intermédiaire, par exemple au moyen d'une piste conductrice, et le terme "couplé" ou le terme "relié", pour désigner soit une liaison électrique directe (signifiant alors "connecté") soit une liaison via un ou plusieurs composants intermédiaires (résistance, condensateur, etc.).

Dans les figures qui vont suivre comprenant des schéma-blocs, un trait plein reliant deux blocs correspond à une ligne de transmission d'un signal électrique avec passage de puissance électrique et un trait pointillé reliant deux blocs correspond à une ligne de transmission d'un signal électrique sans transmission de puissance électrique. Une ligne de transmission peut comprendre un, deux ou plus de deux câbles conducteurs ou pistes conductrices.

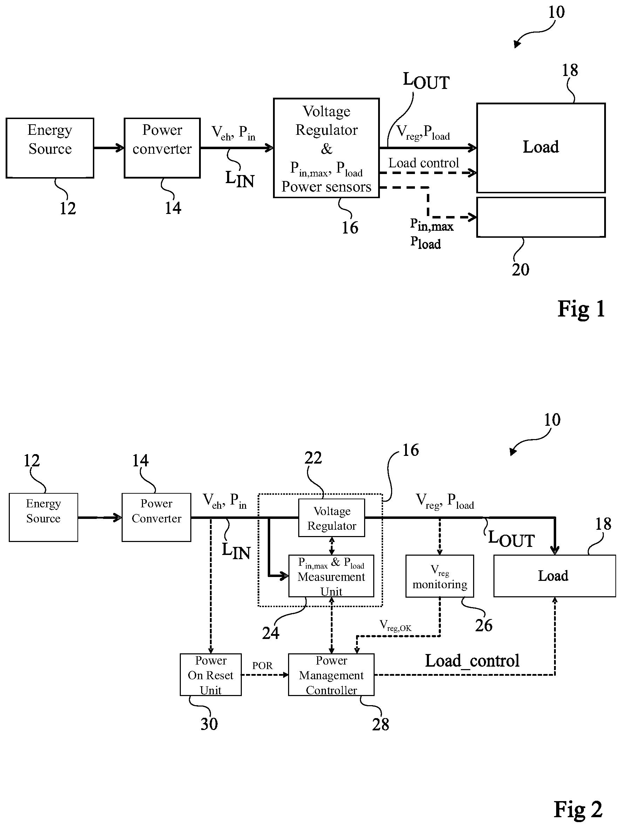

La figure 1 représente un mode de réalisation d'un système électronique ou électromécanique 10. Le système 10 comprend une source d'énergie électrique 12 (Energy Source) qui est reliée, éventuellement par l'intermédiaire d'un circuit de conversion de puissance 14 (Power Converter), par une ligne de transmission L_{IN} à un circuit de transmission d'énergie électrique 16 (Voltage Regulator & P_{in,max}, P_{load} Power sensors) qui dans le présent mode de réalisation correspond à un circuit de régulation de tension.

Le circuit de conversion de puissance 14, ou directement la source d'énergie électrique 12 lorsque le circuit de conversion de puissance 14 n'est pas présent, fournit sur la ligne de transmission L_{IN} une tension électrique Vₑₕ à une puissance électrique instantanée Pᵢₙ. La tension Vₑₕ n'est pas régulée et est susceptible de varier dans le temps.

Le circuit de régulation de tension 16 est relié par une ligne de transmission L_{OUT} à un circuit applicatif 18 (Load). Le circuit de régulation de tension 16 fournit sur la ligne L_{OUT} une tension V_{reg} à une puissance électrique instantanée P_{load}. En fonctionnement, la tension V_{reg} est régulée par le circuit de régulation de tension 16, c'est-à-dire qu'elle est sensiblement égale à une valeur de référence V_{ref} constante. On notera qu'en fonctionnement, la tension Vₑₕ doit être supérieure à la tension V_{reg}.

La source d'énergie électrique 12 peut correspondre à un dispositif de récolte d'énergie ambiante, adapté à extraire et à convertir en énergie électrique une ou plusieurs sources d'énergie présentes dans l'environnement. A titre d'exemple, la source d'énergie électrique 12 est un dispositif de conversion en énergie électrique d'énergie thermique, d'énergie vibratoire, d'énergie solaire, d'énergie éolienne, et/ou d'énergie radiofréquence. Selon un mode de réalisation, la puissance Pᵢₙ fournie par la source d'énergie 12 varie peu pendant la réalisation d'une tâche par le circuit applicatif 18. A titre d'exemple, la durée de la plus longue des tâches pouvant être réalisées par le circuit applicatif 18, par exemple de l'ordre de la seconde, est inférieure à la durée pendant laquelle la puissance Pᵢₙ fournie par la source d'énergie 12 peut varier de 10 %.

Le circuit applicatif 18 comprend par exemple au moins un processeur, un capteur et un module de communication. Le processeur est adapté à exécuter des instructions d'un programme d'ordinateur stockées dans une mémoire. A titre de variante, le processeur est remplacé par au moins un circuit électronique dédié. Le système électronique ou électromécanique 10 ne comprend pas, entre la source d'énergie 12 et le circuit applicatif 18, de dispositif de stockage d'énergie ayant une capacité supérieure à 100 µF. Le système électronique ou électromécanique 10 ne comprend pas, entre la source d'énergie 12 et le circuit applicatif 18, de supercondensateur, d'accumulateur électrique ou de batterie d'accumulateurs électriques capables de maintenir la tension Vₑₕ au-dessus de la tension V_{reg} lorsque le circuit applicatif 18 effectue une ou plusieurs tâches alors que la puissance instantanée d'entrée Pᵢₙ n'est pas suffisante.

Selon un mode de réalisation, l'impédance de sortie de la source d'énergie 12 et/ou du circuit de conversion de puissance 14 lorsqu'il est présent, est inférieure à 10 mégaOhms, de préférence comprise entre 10 Ohms et 100 kiloOhms.

Selon un mode de réalisation, le circuit de régulation de tension 16 est adapté à mesurer à la fois la puissance entrante instantanée maximale disponible P_{in,max} et la puissance instantanée P_{load} consommée par le circuit applicatif 18.

Selon un mode de réalisation, pour la mesure de la puissance P_{in,max}, le circuit de régulation 16 comprend une charge active de courant qui fait évoluer le courant fourni par la source d'énergie 12 jusqu'à une valeur I_{test,max} suffisante pour abaisser la tension Vₑₕ au seuil de tension V_{reg}. La puissance maximale Pi_{n,max} disponible pour alimenter le circuit applicatif 18 vaut alors V_{reg}^{∗}I_{test,max}.

Selon un mode de réalisation, pour la mesure de la puissance P_{load}, le circuit de régulation 16 réalise une recopie du courant fourni au circuit applicatif 18.

Le circuit de régulation 16 peut fournir les valeurs de puissance P_{in,max} et P_{load} à un circuit externe 20. A titre d'exemple, le circuit externe 20 peut comprendre une mémoire dans laquelle les valeurs de puissance P_{in,max} et P_{load} sont stockées.

De façon avantageuse, la puissance maximale P_{in,max} disponible donne des informations sur l'environnement du circuit applicatif 18 qui peut être inconnu pour certaines applications, notamment lorsque la source d'énergie électrique 12 correspond à un circuit de récupération d'énergie.

A partir des mesures des puissances P_{in,max} et P_{load}, le système électronique ou électromécanique 10 peut assurer le bon fonctionnement du circuit applicatif 18 et optimiser l'utilisation de la puissance disponible.

Selon un mode de réalisation, le circuit applicatif 18 peut fonctionner seulement selon deux modes de fonctionnement, un mode de fonctionnement dans lequel le circuit applicatif 18 est à l'arrêt et un mode de fonctionnement dans lequel le circuit applicatif 18 est en marche. Selon un autre mode de réalisation, le circuit applicatif 18 peut être adapté à fonctionner selon plus de modes de fonctionnement, dont un mode de fonctionnement à l'arrêt, la consommation électrique du circuit applicatif 18 variant d'un mode de fonctionnement à l'autre. A titre d'exemple, dans un mode de fonctionnement, le processeur du circuit applicatif 18 peut fonctionner à une fréquence réduite, ce qui entraîne une réduction de la consommation électrique du circuit applicatif 18. Dans un autre mode de fonctionnement, toutes les fonctions de calcul, de mesure et de communication du circuit applicatif 18 sont actives et fonctionnent selon des performances maximales. La consommation électrique du circuit applicatif 18 est alors maximale.

Le circuit de régulation 16 ou un autre circuit du système électronique ou électromécanique 10 peut transmettre un signal de commande Load_control au circuit applicatif 18 pour commander le fonctionnement du circuit applicatif 18 selon l'un des modes de fonctionnement du circuit applicatif 18. De préférence, le circuit de régulation 16 ou un autre circuit du système électronique ou électromécanique 10 transmet le signal de commande Load_control au circuit applicatif 18 pour sélectionner un mode de fonctionnement du circuit applicatif 18 dans lequel la puissance P_{load} consommée par le circuit applicatif 18 est inférieure ou égale à la puissance maximale disponible P_{in,max}.

La figure 2 représente un mode de réalisation plus détaillé du système 10 de la figure 1. Dans ce mode de réalisation, le circuit de régulation 16 comprend un module 22 (Voltage Regulator) de régulation de tension qui reçoit la tension Vₑₕ et fournit la tension V_{reg}. Le circuit de régulation 16 comprend, en outre, un module 24 (P_{in,max} & P_{load} Measurement Unit) de mesure de la puissance maximale P_{in,max} et de la puissance P_{load} consommée par le circuit applicatif 18 qui reçoit la tension Vₑₕ à la puissance Pᵢₙ et qui est relié au module 22.

Le système 10 comprend, en outre, un module 26 (V_{reg} monitoring) de surveillance de la tension V_{reg} qui fournit un signal binaire V_{reg,OK} à un premier état, par exemple "1", lorsque la tension V_{reg} est à un niveau adapté au bon fonctionnement du circuit applicatif 18 et qui fournit le signal binaire V_{reg,OK} à un deuxième état, par exemple "0", lorsque la tension V_{reg} n'est pas à un niveau adapté au bon fonctionnement du circuit applicatif 18, par exemple lorsque la tension V_{reg} est inférieure à une certaine fraction (entre 70 % et 95 %) de la valeur de référence V_{reg0}.

Le système 10 comprend, en outre, un module 28 (Power Management Controller) de gestion de puissance qui est relié aux module de mesure 24 et au module de surveillance 26 et qui fournit le signal de commande Load control au circuit applicatif 18.

Le système 10 comprend, en outre, un module 30 (Power On Reset Unit) de commande du démarrage du module de gestion de puissance 28 et éventuellement d'autres éléments composant le système électronique ou électromécanique 10. A titre d'exemple, le module 30 reçoit la tension Vₑₕ et transmet un signal POR au module 28. Le module 30 garantit le démarrage du module de gestion de puissance 28 dans un état prédéterminé.

L'alimentation des différents composants du système 10 peut être réalisée à partir de la tension V_{reg}.

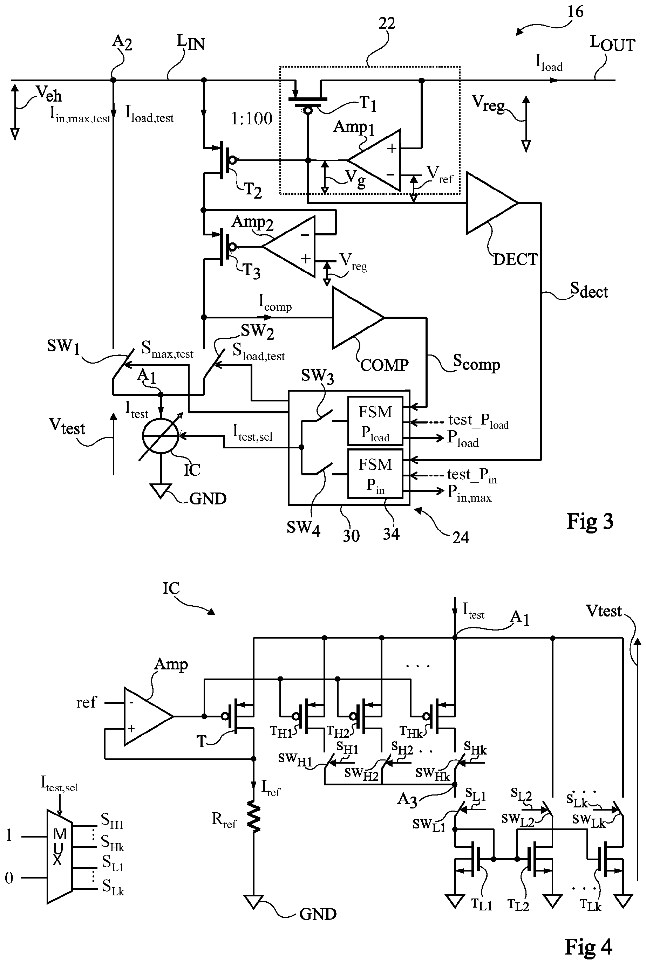

La figure 3 représente un mode de réalisation plus détaillé du circuit de régulation 16. En figure 3, les tensions Vₑₕ et V_{reg} sont référencées par rapport à un potentiel de référence bas. Dans le présent mode de réalisation, le module de régulation de tension 22 est un régulateur de tension à faible chute de tension ou régulateur LDO comprenant un transistor MOS T₁, par exemple à canal P, et un amplificateur différentiel Amp₁. La source du transistor T₁ est reliée par la ligne de connexion L_{IN} au circuit de conversion de puissance 14, ou directement à la source 12 lorsque le circuit de conversion de puissance 14 n'est pas présent, et reçoit la tension Vₑₕ. Le drain du transistor T₁ est relié par la ligne de connexion L_{OUT} au circuit applicatif 18 et fournit la tension V_{reg}. Le transistor T₁ est traversé par un courant I_{load}. L'entrée non inverseuse (+) de l'amplificateur Amp₁ reçoit la tension V_{reg} et l'entrée inverseuse (-) de l'amplificateur Amp₁ reçoit une tension de référence V_{ref}. L'amplificateur Amp₁ fournit une tension V_{g} de commande de la grille du transistor T₁.

Le circuit de régulation 16 comprend, en outre, une charge active IC commandable adapté à tirer un courant Iₜₑₛₜ et dont une borne A₁ est reliée par l'intermédiaire d'un interrupteur SW₁ à un noeud A₂ de la ligne L_{IN} et dont l'autre borne est reliée à une source du potentiel de référence bas GND, par exemple la masse. On appelle Vₜₑₛₜ la tension aux bornes de la charge active IC et I_{in,max,test} le courant traversant l'interrupteur SW₁.

Le circuit de régulation 16 comprend, en outre, un transistor MOS T₂, par exemple à canal P, dont la source est reliée au noeud A₂ et dont la grille reçoit la tension V_{g}. Le transistor T₂ est traversé par un courant I_{load,test}. Les dimensions des transistors T₁ et T₂ sont choisis pour que le rapport Coeff entre le courant I_{load,test} et le courant I_{load} soit supérieur à 10, de préférence supérieur à 50, par exemple environ égal à 100. Le circuit de régulation 16 comprend, en outre, un transistor MOS T₃, par exemple à canal P, dont la source est reliée au drain du transistor T₂ et dont le drain est relié au noeud A₁ par l'intermédiaire d'un interrupteur SW₂. Le circuit de régulation 16 comprend, en outre, un amplificateur différentiel Amp₂. L'entrée inverseuse (-) de l'amplificateur Amp₂ est reliée à la source du transistor T₃ et l'entrée non inverseuse (+) de l'amplificateur Amp₂ reçoit la tension V_{reg}.

De plus, le circuit de régulation 16 comprend un détecteur DECT recevant la tension V_{g} et fournissant un signal binaire S_{dect} à un premier état, par exemple "1", lorsque la tension V_{g} est supérieure strictement à 0 V et fournissant le signal binaire S_{dect} à un deuxième état, par exemple "0", lorsque la tension V_{g} est inférieure ou égale à 0 V.

Le circuit de régulation 16 comprend, en outre, un comparateur COMP qui fournit un signal S_{comp}, par exemple un signal binaire, et dont l'entrée est reliée au drain du transistor T₃ et reçoit un courant I_{comp}. Selon un mode de réalisation, le comparateur COMP est adapté à fournir le signal S_{comp} à l'état "0" lorsque le courant I_{comp} est positif et à fournir le signal S_{comp} à l'état "1" lorsque le courant I_{comp} est négatif ou nul.

De plus, le circuit de régulation 16 comprend un module de commande 30 qui fournit un signal I_{test,sel} de commande de la charge active IC, un signal S_{max,test} de commande de l'interrupteur SW₁ et un signal S_{load,test} de commande de l'interrupteur SW₂. Le module de commande 30 reçoit les signaux S_{dect} et S_{comp} et des signaux binaires test_P_{load} et test_Pᵢₙ. Le module de commande 30 fournit, en outre, un signal P_{load} représentatif de la puissance consommée par le circuit applicatif 18 et un signal P_{in,max} représentatif de la puissance maximale fournie par la source d'énergie 12. Selon un mode de réalisation, le module de commande 30 comprend un automate fini 32 (FSM P_{load}) qui reçoit les signaux S_{comp} et test_P_{load} et fournit le signal P_{load}, L'automate fini 32 est, en outre, relié à la charge active IC par un interrupteur SW₃. Le module de commande 30 comprend, en outre, un automate fini 34 (FSM Pᵢₙ) qui reçoit les signaux S_{dect} et test_Pᵢₙ et fournit le signal P_{in,max}. L'automate fini 34 est, en outre, relié à la charge active IC par un interrupteur SW₄.

La figure 4 représente un mode de réalisation de la charge active IC. La charge active IC comprend un transistor MOS T, par exemple à canal P, dont la source est reliée au noeud A₁ et dont le drain est reliée à une borne d'une résistance R_{ref}, l'autre borne de la résistance R_{ref} étant reliée à la source du potentiel de référence bas GND. La résistance R_{ref} est traversée par un courant I_{ref}. La charge active IC comprend, en outre, un amplificateur différentiel Amp dont l'entrée non inverseuse (+) est reliée au drain du transistor T et dont l'entrée inverseuse (-) reçoit une tension de référence ref. La sortie de l'amplificateur Amp commande la grille du transistor T. La charge active IC comprend, en outre, k transistors MOS T_{Hi}, par exemple à canal P, où i varie de 1 à k et où k est un nombre entier pouvant varier de 1 à 100. La source de chaque transistor T_{Hi} est reliée au noeud A₁ et le drain de chaque transistor T_{Hi} est relié à un noeud A₃ par l'intermédiaire d'un interrupteur SW_{Hi} commandé par un signal S_{Hi}. Les grilles des transistors sont reliées à la grille du transistor T. La charge active IC comprend, en outre, k transistors MOS T_{Lj}, par exemple à canal P, où j varie de 1 à k. La source du transistor T_{L1} est reliée à la grille du transistor T_{L1} et est reliée au noeud A₃ par l'intermédiaire d'un interrupteur SW_{L1} commandé par un signal S_{L1}. La source de chaque transistor T_{Hj}, j variant de 1 à k, est reliée au noeud A₁ par l'intermédiaire d'un interrupteur SW_{Lj} commandé par un signal S_{Lj}. Le drain de chaque transistor T_{Lj} est relié à la source du potentiel de référence bas GND. La charge active IC comprend, en outre, un multiplexeur MUX commandé par le signal I_{test,sel}, recevant une entrée à "1" et une entrée à "0" et fournissant les signaux S_{H1} à S_{Hk} et S_{L1} à S_{Lk}. L'état à "0" ou à "1" de chaque signal S_{H1} à S_{Hk} et S_{L1} à S_{Lk} dépend du signal I_{test,sel}.

Lors d'une opération de mesure de la puissance maximale disponible en entrée P_{in,max}, le module 30 commande la charge active IC pour augmenter progressivement le courant Iₜₑₛₜ jusqu'à un courant maximal I_{in,max}. Le courant maximal I_{in,max} est le courant que doit tirer la charge active IC pour abaisser la tension de sortie Vₑₕ de la source d'énergie 12 à la tension d'alimentation V_{reg}. La puissance Pi_{n,max} est alors égale à I_{in,max}^{∗}V_{reg}. La mesure de la puissance P_{load} consommée par le circuit applicatif 18 est réalisée en mesurant la recopie de courant I_{load,test}. La puissance P_{load} est alors égale à Coeff^{∗}I_{load,test}^{∗}V_{reg}.

La charge active IC forme un puits de courant adapté à tirer le courant Iₜₑₛₜ d'intensité croissante depuis la ligne de transmission L_{IN}. Même si la figure 4 représente un mode de réalisation particulier du puits de courant IC, l'homme de l'art peut imaginer d'autres modes de réalisation du puits de courant IC. En particulier, tout circuit permettant de prélever un courant d'intensité commandable sur la ligne de transmission L_{IN} peut être utilisé. On peut par exemple utiliser un circuit comportant une résistance variable en série avec un circuit de régulation de la tension aux bornes de la résistance (par exemple un transistor MOS commandé par un circuit de comparaison recevant en entrée le potentiel de la source du transistor reliée à la résistance).

Selon un mode de réalisation, la mesure de la puissance maximale disponible en entrée P_{in,max} et la mesure de la puissance P_{load} consommée par le circuit applicatif 18 ne sont pas réalisés simultanément. A titre d'exemple, le signal test_Pᵢₙ est à "1" lorsqu'une opération de mesure de la puissance maximale disponible en entrée P_{in,max} doit être réalisée et est à "0" dans le cas contraire et le signal test_P_{load} est à "1" lorsqu'une opération de mesure de la puissance P_{load} consommée par le circuit applicatif 18 doit être réalisée et est à "0" dans le cas contraire.

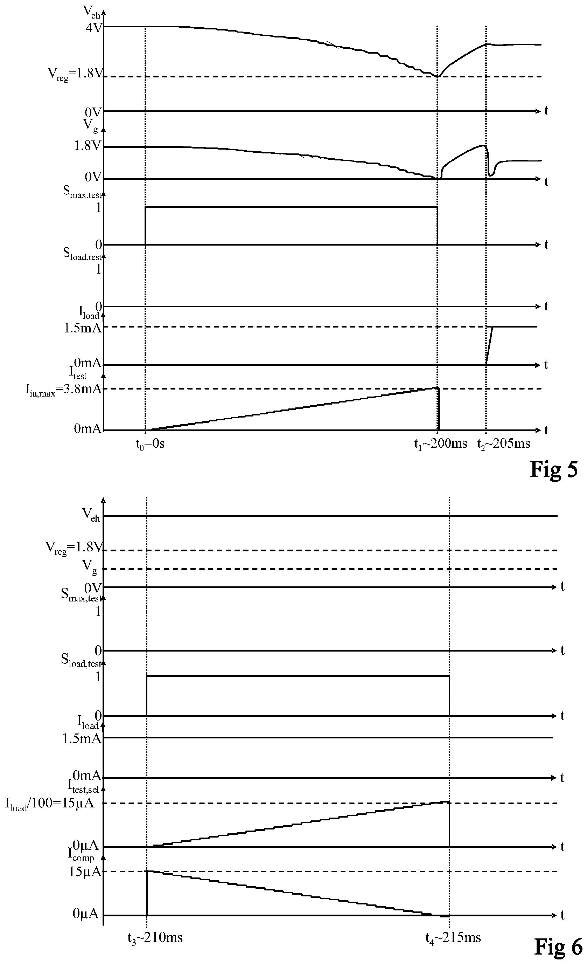

Les figures 5 et 6 représentent des chronogrammes de tensions et de courants du circuit de régulation 16 respectivement lors d'une mesure de la puissance maximale disponible en entrée P_{in,max} et lors d'une mesure de la puissance P_{load} consommée par le circuit applicatif 18. Les valeurs numériques indiquées sur ces figures sont données à titre d'exemple. Les instants t₀, t₁, t₂, t₃ et t₄ sont des instants successifs.

Une requête de mesure de la puissance maximale disponible en entrée P_{in,max} est transmise par le signal test_Pᵢₙ, non représenté en figure 5, qui est, par exemple, mis à "1". L'interrupteur SW₁ est fermé à l'instant t₀ par la mise à "1" du signal S_{max,test}. L'interrupteur SW₂ est ouvert pendant la mesure de la puissance maximale disponible en entrée P_{in,max}, ce qui correspond au signal S_{load,test} à "0". Le noeud A₂ est alors connecté à la charge active IC. Dans l'exemple présenté sur la figure 5, le courant Iₜₑₛₜ croît à partir de l'instant t₀ par paliers de courant, par exemple d'environ 100 µA. Comme l'impédance de sortie de la source d'énergie 12 ou du circuit de conversion de puissance 14 est finie, la tension Vₑₕ baisse au fur et à mesure que le courant Iₜₑₛₜ croît. Ceci entraîne une diminution de la tension V_{g} dans le cas où le transistor T₁ du module de régulation 22 est un transistor MOS à canal P. Lorsque la tension Vₑₕ atteint le seuil de tension V_{reg} à l'instant t₁, la tension de grille V_{g} est égale à 0 V. Le passage de la tension V_{g} à 0 V est détecté par le détecteur DECT et la charge active IC est déconnectée du noeud A₂ par l'ouverture de l'interrupteur SW₁ (signal S_{max,test} à "0").

Si la puissance disponible en entrée Pᵢₙ est telle que la tension Vₑₕ ne diminue pas jusqu'à la tension V_{reg} alors l'interrupteur SW₁ est ouvert lorsque le courant Iₜₑₛₜ atteint la valeur maximum I_{test_max} pouvant être tirée par la charge active IC. L'avant-dernière valeur du courant Iₜₑₛₜ atteinte au moment où l'interrupteur SW₁ est ouvert, est le courant maximum I_{in,max} que peut tirer la charge active IC sous la tension d'alimentation du système V_{reg}. La puissance maximale disponible en entrée Pi_{n,max} vaut alors P_{in,max}=I_{in,max}^{∗}V_{reg}. La valeur P_{in,max} peut être mémorisée et/ou communiquée à un circuit extérieur. Dans l'exemple donné, la durée d'une mesure du courant I_{in,max} est la durée entre les instants t₀ et t₁, par exemple environ 200 ms. Selon un autre mode de réalisation, le courant Iₜₑₛₜ croît exponentiellement lors d'une opération de mesure. Selon un autre mode de réalisation, le courant Iₜₑₛₜ croît par dichotomie lors d'une opération de mesure.

Selon un mode de réalisation, la mesure de la puissance maximale disponible P_{in,max} est réalisée "à vide", c'est-à-dire lorsque le circuit applicatif 18 est éteint, ce qui correspond au courant I_{load} égal à 0 A entre les instants t₀ et t₂.

La mesure de la puissance maximale disponible P_{in,max} donne directement une information sur l'environnement du système électronique ou électromécanique 10 qui peut ne pas être connu. Il est par exemple possible, à partir de la valeur de la puissance maximale disponible P_{in,max} d'accéder à l'information sur la vitesse du vent si la source d'énergie 12 est une éolienne, sur la température si la source d'énergie 12 est un thermo-élément, sur l'ensoleillement si la source d'énergie 12 est une cellule photovoltaïque ou sur la qualité du lien radiofréquence si le système 10 est télé-alimenté.

En combinaison avec la mesure de la puissance P_{load} consommée par le circuit applicatif 18 qui va être décrite plus en détails par la suite, la mesure de la puissance P_{in,max} permet d'assurer le bon fonctionnement du circuit applicatif 18 et d'optimiser l'exploitation de la puissance disponible en sortie de la source d'énergie 12.

La puissance consommée P_{load} du circuit applicatif 18 alimenté sous la tension régulée V_{reg} est susceptible de varier avec le temps, la température, ou tout autre paramètre. La puissance P_{load} peut donc ne pas être connue a priori.

La mesure de la puissance P_{load} est réalisée lorsque le circuit applicatif 18 est en fonctionnement. En figure 5, le circuit applicatif 18 démarre à l'instant t₂.

Une requête de mesure de la puissance P_{load} est transmise par le signal test_P_{load}, non représenté en figure 6, qui est, par exemple, mis à "1". L'interrupteur SW₂ est fermé à l'instant t₃ par la mise à "1" du signal S_{load, test}. L'interrupteur SW₁ est ouvert pendant la mesure de la puissance P_{load}, ce qui correspond au signal S_{max, test} à "0". Le courant I_{load} qui alimente le circuit applicatif 18 est recopié par un miroir de courant qui fournit le courant I_{load, test} égal au courant I_{load} divisé par le facteur Coeff, par exemple égal à 100. Le courant I_{load, test} est égal à la somme du courant Iₜₑₛₜ qui circule à travers la charge active IC et du courant I_{comp} qui circule à travers le comparateur de courant COMP. Dans l'exemple présenté sur la figure 6, le courant Iₜₑₛₜ croît par paliers de courant, par exemple d'environ 500 nA à partir de l'instant t₃ et ce, jusqu'à ce que le courant I_{comp} change de sens et devienne négatif. Cette inversion est détectée par le comparateur COMP, qui fournit par exemple un signal S_{comp} à "1". La charge active IC en courant est alors déconnectée par l'ouverture de l'interrupteur SW₂ à l'instant t₄ par la mise à "0" du signal S_{load,test}. La valeur du courant I_{load} est la dernière valeur du courant Iₜₑₛₜ qui précède l'inversion du courant I_{comp} multipliée par le rapport Coeff. On obtient finalement P_{load}=Coeff^{∗}I_{load,test}^{∗}V_{reg}. Dans l'exemple illustré en figure 6, la durée de mesure du courant I_{load} est la durée entre les instants t₃ et t₄ et est d' environ 5 ms. Selon un autre mode de réalisation, le courant Iₜₑₛₜ croît exponentiellement lors d'une opération de mesure. Selon un autre mode de réalisation, le courant Iₜₑₛₜ croît par dichotomie lors d'une opération de mesure.

La valeur P_{load} peut être mémorisée et/ou communiquée à un circuit externe. L'évolution de la puissance P_{load} peut ainsi être suivie et la dernière valeur déterminée de la puissance P_{load} peut servir de nouvelle référence lors du prochain démarrage du circuit applicatif 18.

Selon un autre mode de réalisation, une valeur approximative de la puissance P_{load} peut être déterminée en réalisant une mesure de la puissance disponible P_{in,max} alors que le circuit applicatif 18 est en fonctionnement. La différence entre la valeur de P_{in,max} "à vide", c'est-à-dire lorsque le circuit applicatif n'est pas en fonctionnement, et la valeur de P_{in,max} en charge est une approximation de la puissance P_{load}. Ce mode de réalisation de mesure de la puissance P_{load} est indépendant de la structure du module de régulation de tension 22. Toutefois, ce mode de réalisation de détermination d'une approximation de la puissance P_{load} est moins précis que le mode de réalisation de mesure de la puissance P_{load} décrit précédemment.

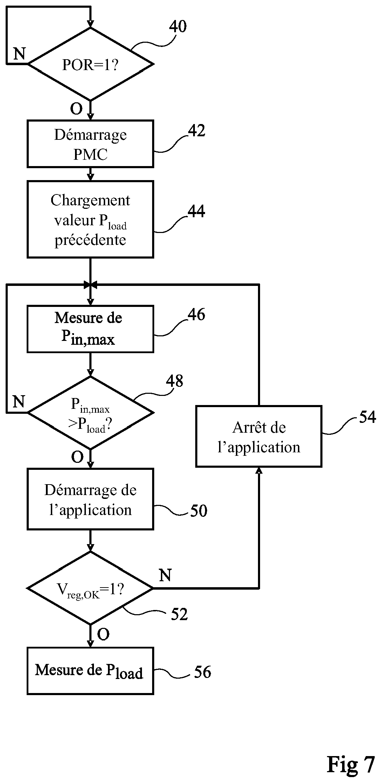

La figure 7 représente un diagramme d'états et de transitions d'un mode de réalisation d'un procédé de fonctionnement du circuit de transmission 16 tel que représenté sur la figure 2, dans lequel le circuit applicatif 18 fonctionne selon un mode de fonctionnement unique et mettant en oeuvre un procédé de régulation utilisant les valeurs des puissances P_{in,max} et P_{load}. Dans le présent mode de réalisation, les puissances P_{in,max} et P_{load} sont mesurées au démarrage du circuit applicatif 18.

A l'étape 40, le module de commande de démarrage 30 démarre, par exemple lorsque la tension Vₑₕ dépasse un seuil. Lorsqu'il a démarré, le module de commande de démarrage 30 fournit un signal POR à "1". Le procédé se poursuit alors à l'étape 42.

A l'étape 42, le module 30 commande le démarrage du module de gestion de puissance 28. Le procédé se poursuit alors à l'étape 44.

A l'étape 44, le module de gestion de puissance 28 charge la dernière valeur déterminée de la puissance P_{load}, qui est par exemple stockée dans une mémoire, et qui est utilisée comme valeur de puissance de référence. Le procédé se poursuit alors à l'étape 46.

A l'étape 46, le module 24 détermine la puissance maximale P_{in,max}, par exemple comme cela a été décrit précédemment, et fournit la valeur de la puissance maximale P_{in,max} ainsi déterminée au module de gestion de puissance 28. Le procédé se poursuit alors à l'étape 48.

A l'étape 48, le module de gestion de puissance 28 compare la puissance maximale P_{in,max} à la valeur de puissance P_{load} de référence. Si la puissance maximale P_{in,max} est inférieure à la puissance P_{load} de référence, le procédé retourne à l'étape 46. Si la puissance maximale P_{in,max} est supérieure à la valeur de puissance P_{load} de référence, le procédé se poursuit à l'étape 50.

A l'étape 50, le module de gestion de puissance 28 commande le démarrage du circuit applicatif 18. Le procédé se poursuit à l'étape 52.

A l'étape 52, au cours du fonctionnement du circuit applicatif 18, le module 26 de surveillance de la tension V_{reg} fournit le signal binaire V_{reg,OK} au module de gestion de puissance 28. Si le signal V_{reg,OK} est dans un état, par exemple "0", qui indique que la tension V_{reg} n'est pas à un niveau suffisant pour le bon fonctionnement du circuit applicatif 18, le procédé se poursuit à l'étape 54. Si le signal V_{reg,OK} est dans un état, par exemple "1", qui indique que la tension V_{reg} est à un niveau suffisant pour le bon fonctionnement du circuit applicatif 18, le procédé se poursuit à l'étape 56.

A l'étape 54, le circuit applicatif 18 est arrêté et le procédé se poursuit à l'étape 46.

A l'étape 56, le module 24 détermine la puissance P_{load}, comme cela a été décrit précédemment, et fournit la valeur de la puissance P_{load} ainsi déterminée au module de gestion de puissance 28. Cette valeur est utilisée comme nouvelle valeur de puissance P_{load} de référence.

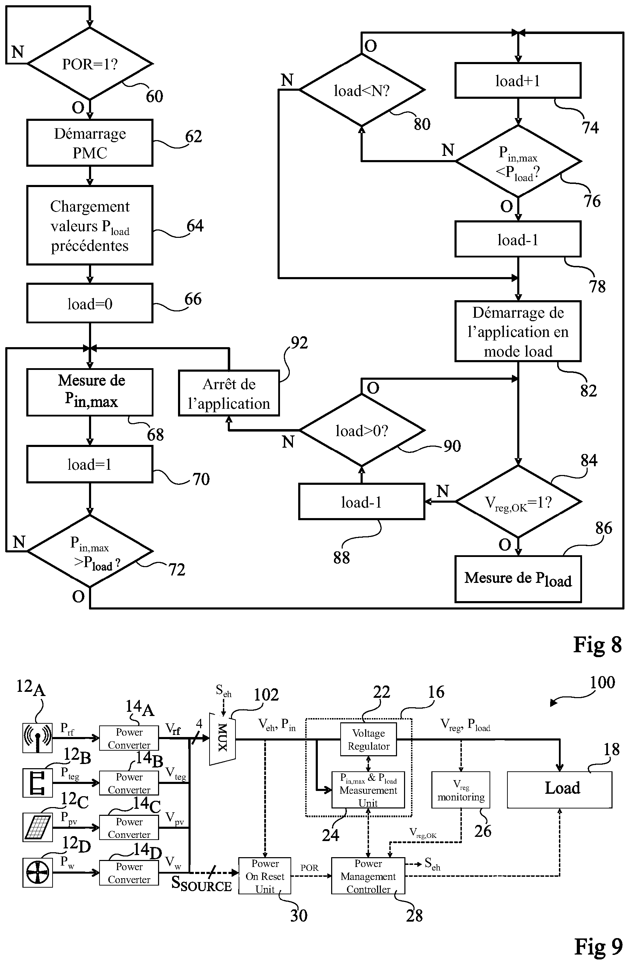

La figure 8 représente le diagramme d'états et de transitions du circuit de transmission 16 tel que représenté sur la figure 2, mettant en oeuvre un procédé de régulation utilisant les valeurs des puissances P_{in,max} et P_{load} et dans lequel le circuit applicatif 18 peut fonctionner selon N modes de fonctionnement, dont un mode de fonctionnement à l'arrêt, N étant un nombre entier pouvant varier de 2 à 10. Dans le présent mode de réalisation, les puissances P_{in,max} et P_{load} sont mesurées au démarrage du circuit applicatif 18. Dans le présent mode de réalisation, le mode de fonctionnement dans lequel fonctionne le circuit applicatif 18 est commandé par le signal Load_control fourni par le module de gestion de puissance 28. A titre d'exemple, lorsque le signal Load_control est égal à 0, le circuit applicatif 18 est à l'arrêt et lorsque le signal Load_control varie de 1 à N, le circuit applicatif 18 est alimenté et consomme une puissance moyenne P_{load} sous une tension régulée V_{reg} qui augmente avec le signal Load_control.

A l'étape 60, le module de commande de démarrage 30 démarre. Lorsqu'il a démarré, le module de commande de démarrage 30 fournit un signal POR à "1". Le procédé se poursuit alors à l'étape 62.

A l'étape 62, le module 30 commande le démarrage du module de gestion de puissance 28. Le procédé se poursuit alors à l'étape 64.

A l'étape 64, le module de gestion de puissance 28 charge les dernières valeurs déterminées de puissance P_{load} pour les différents modes de fonctionnement du circuit applicatif 18. Ces valeurs sont par exemple stockées dans une mémoire. Elles sont utilisées comme valeurs de puissance de référence par la suite. Le procédé se poursuit alors à l'étape 66.

A l'étape 66, le module de gestion de puissance 28 commande le maintien à l'arrêt du circuit applicatif 18. Le procédé se poursuit alors à l'étape 68.

A l'étape 68, le module 24 détermine la puissance maximale P_{in,max}, comme cela a été décrit précédemment, et fournit la valeur de la puissance maximale P_{in,max} ainsi déterminée au module de gestion de puissance 28. Le procédé se poursuit alors à l'étape 70.

A l'étape 70, le module de gestion de puissance 28 incrémente la valeur à appliquer au signal Load_control sans toutefois la transmettre au circuit applicatif 18. Le procédé se poursuit alors à l'étape 72.

A l'étape 72, le module de gestion de puissance 28 compare la puissance maximale P_{in,max} à la dernière valeur de référence de la puissance P_{load} correspondant au signal Load_control égal à 1. Si la puissance maximale P_{in,max} est inférieure à la dernière valeur de référence de la puissance P_{load}, le procédé retourne à l'étape 68. Si la puissance maximale P_{in,max} est supérieure à la dernière valeur de référence de la puissance P_{load}, le procédé se poursuit à l'étape 74.

A l'étape 74, le module de gestion de puissance 28 incrémente la valeur à appliquer au signal Load_control sans toutefois la transmettre au circuit applicatif 18. Le procédé se poursuit alors à l'étape 76.

A l'étape 76, le module de gestion de puissance 28 compare la puissance maximale P_{in,max} à la dernière valeur de référence de la puissance P_{load} correspondant à la valeur du signal Load_control déterminée à l'étape 74. Si la puissance maximale P_{in,max} est inférieure à la dernière valeur de référence de la puissance P_{load}, le procédé retourne à l'étape 78. Si la puissance maximale P_{in,max} est supérieure à la dernière valeur de référence de la puissance P_{load}, le procédé se poursuit à l'étape 80.

A l'étape 78, le module de gestion de puissance 28 décrémente la valeur à appliquer au signal Load_control sans toutefois la transmettre au circuit applicatif 18. Le procédé se poursuit alors à l'étape 82.

A l'étape 80, le module de gestion de puissance 28 compare la valeur du signal Load control déterminée à l'étape 74 à la valeur N. Si la valeur du signal Load_control est inférieure strictement à N, le procédé retourne à l'étape 74. Si la valeur du signal Load_control est égale à N, le procédé se poursuit à l'étape 82.

A l'étape 82, le module de gestion de puissance 28 commande le démarrage du circuit applicatif 18 avec la dernière valeur du signal Load_control déterminée à l'étape 76. Le procédé se poursuit à l'étape 84.

A l'étape 84, au cours du fonctionnement du circuit applicatif 18, le module 26 de surveillance de la tension V_{reg} fournit le signal binaire V_{reg,OK} au module de gestion de puissance 28. Si le signal V_{reg,OK} est dans un état, par exemple "1", qui indique que la tension V_{reg} est à un niveau suffisant pour le bon fonctionnement du circuit applicatif 18, le procédé se poursuit à l'étape 86. Si le signal V_{reg,OK} est dans un état, par exemple "0", qui indique que la tension V_{reg} n'est pas à un niveau suffisant pour le bon fonctionnement du circuit applicatif 18, le procédé se poursuit à l'étape 88.

A l'étape 86, le module 24 détermine la puissance P_{load}, comme cela a été décrit précédemment, et fournit la valeur de la puissance P_{load} ainsi déterminée au module de gestion de puissance 28.

A l'étape 88, le module de gestion de puissance 28 décrémente la valeur du signal Load_control et la transmet au circuit applicatif 18. Le procédé se poursuit alors à l'étape 90.

A l'étape 90, le module de gestion de puissance 28 compare la valeur du signal Load_control déterminée à l'étape 88 à 0. Si la valeur du signal Load_control est supérieure strictement à 0, le procédé retourne à l'étape 84. Si la valeur du signal Load_control est égale à 0, le procédé se poursuit à l'étape 92.

A l'étape 92, le circuit applicatif 18 est arrêté et le procédé se poursuit à l'étape 68.

La figure 9 représente un autre mode de réalisation d'un système électronique ou électromécanique 100 comprenant l'ensemble des éléments du système électronique ou électromécanique 10 représenté en figure 2 à la différence que la source d'énergie 12 est remplacée par plusieurs sources d'énergie 12_{A}, 12_{B}, 12_{C} et 12_{D}, et que le module de commande de démarrage 30 reçoit un signal S_{source}. Les sources d'énergie 12_{A}, 12_{B}, 12_{C} et 12_{D} correspondent, par exemple, à un récupérateur d'énergie radiofréquence 12_{A} fournissant une puissance électrique P_{rf}, à un récupérateur d'énergie thermique 12_{B} fournissant une puissance électrique P_{teg}, à un récupérateur d'énergie solaire 12_{C} fournissant une puissance électrique Pₚᵥ et à un récupérateur d'énergie éolienne 12_{D} fournissant une puissance électrique P_{w}. Les sources d'énergie 12_{A}, 12_{B}, 12_{C} et 12_{D} alimentent des circuits de conversion de puissance 14_{A}, 14_{B}, 14_{C} et 14_{D} respectifs qui fournissent des tensions électriques V_{rf}, V_{teg}, Vₚᵥ et V_{w}. A titre de variante, au moins l'un des circuits de conversion de puissance 14_{A}, 14_{B}, 14_{C} et 14_{D} peut ne pas être présent. Le système 100 comprend, en outre, un multiplexeur 102 commandé par un signal Sₑₕ, qui permet de sélectionner une ou plusieurs des sources d'énergie 12_{A}, 12_{B}, 12_{C} et 12_{D}. Selon un mode de réalisation, la puissance maximale P_{in,max} disponible peut être mesurée séparément en sortie de chaque source d'énergie 12_{A}, 12_{B}, 12_{C} et 12_{D}, ou de certaines d'entre elles, de manière séquentielle. A partir de ces résultats, il est ensuite possible de choisir la source d'énergie la plus adaptée pour l'alimentation du circuit applicatif 18. Le signal Sₑₕ peut être représentatif de la source d'énergie qui est sélectionnée pour l'alimentation du circuit applicatif 18.

Dans le mode de réalisation décrit précédemment en relation avec la figure 3, la charge active IC est reliée par l'interrupteur SW₁ au noeud A₂ qui est situé sur la ligne de transmission L_{IN} entre la source d'énergie 12 et le circuit de conversion de puissance 16. Selon un autre mode de réalisation, la charge active IC peut être reliée par l'interrupteur SW₁ à un noeud qui est situé entre le circuit de conversion de puissance 16 et le circuit applicatif 18, notamment lorsque le circuit de conversion de puissance 16 est du type à faible chute de tension. Toutefois, la puissance P_{in,max} ainsi mesurée tient compte de la puissance consommée par le circuit de conversion de puissance 16.

Des modes de réalisation particuliers ont été décrits. Diverses variantes et modifications apparaîtront à l'homme de l'art. En particulier, bien que dans les modes de réalisation décrits précédemment avec la figure 3, le module de régulation de tension 22 soit du type à faible chute de tension, le module de régulation de tension 22 peut avoir une structure différente. A titre d'exemple, le module de régulation de tension 22 peut correspondre à un circuit d'alimentation à découpage à tension de sortie régulée.

La détermination de la puissance P_{in,max} peut être réalisée comme cela a été décrit précédemment à la différence que le courant I_{in,max} est le courant que doit tirer la charge active IC pour abaisser la tension de sortie Vₑₕ de la source d'énergie 12 jusqu'à la tension minimale V_{eh,min} pour laquelle le circuit de régulation de tension 16 est capable de fournir la tension V_{reg}, la tension V_{eh,min} pouvant être différente de la tension V_{reg} selon le type de circuit de régulation 16 considéré. La détermination de la puissance P_{load} peut être réalisée comme cela a été décrit précédemment à la différence que le courant I_{load,test} est de préférence tiré depuis la ligne de transmission L_{OUT}.

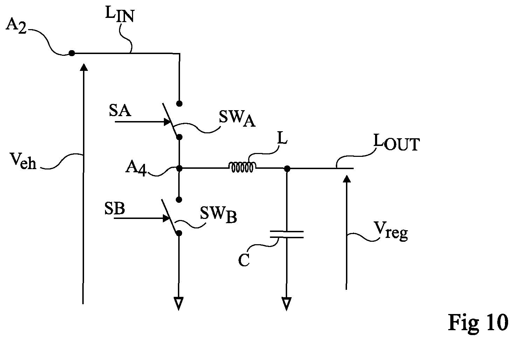

La figure 10 représente un autre mode de réalisation du module de régulation de tension 22 du type à découpage. Le module de régulation de tension 22 comprend un premier interrupteur SW_{A}, par exemple un transistor MOS à canal N, commandé par un signal SA et reliant le noeud A₂ à un noeud A₄. Le module de régulation de tension 22 comprend, en outre, un deuxième interrupteur SW_{B}, par exemple un transistor MOS à canal N, commandé par un signal SB et reliant le noeud A₄ à une source du potentiel de référence bas GND. Le module de régulation de tension 22 comprend, en outre, une inductance L reliant le noeud A₄ à la ligne de transmission L_{OUT} et un condensateur C reliant la ligne de transmission L_{OUT} à la source du potentiel de référence bas GND.

Les interrupteurs SW_{A} et SW_{B} sont commandés de façon complémentaire de sorte que lorsque l'un des interrupteurs SW_{A} ou SW_{B} est ouvert, l'autre interrupteur est fermé. Le signal SA peut être un signal binaire modulé en largeur d'impulsion, le rapport entre les tensions V_{reg} et Vₑₕ dépendant du rapport cyclique du signal SA et étant, par exemple, proportionnel au rapport cyclique du signal SA.

## Revendications

1. Système électronique ou électromécanique (10 ; 100) comprenant au moins une source d'énergie électrique (12 ; 12_{A}, 12_{B}, 12_{C}, 12_{D}), un premier circuit (18) adapté à fonctionner dans au moins deux modes de fonctionnement dont l'un correspond à l'arrêt du circuit applicatif, et un circuit (16) de transmission de l'énergie électrique de la source d'énergie au circuit applicatif, le circuit de transmission étant, en outre, adapté à déterminer une première valeur de la puissance électrique instantanée maximale susceptible d'être fournie par la source d'énergie, à déterminer une deuxième valeur de la puissance électrique instantanée consommée par le circuit applicatif dans au moins l'un des modes de fonctionnement et à stocker les première et deuxième valeurs ou à sélectionner le mode de fonctionnement du circuit applicatif parmi lesdits au moins deux modes de fonctionnement à partir des première et deuxième valeurs, dans lequel le circuit de transmission (16) comprend un circuit de régulation de tension (22) adapté à recevoir une première tension (Vₑₕ) fournie par la source d'énergie (12), ou par un circuit de conversion de puissance (14) interposé entre la source d'énergie et le circuit de transmission, et adapté à fournir une deuxième tension (V_{reg}) régulée à une tension de référence (V_{ref}) alimentant le premier circuit (18), dans lequel la source d'énergie (12) est reliée au circuit de transmission (16) par une première ligne de transmission (L_{IN}), dans lequel le circuit de transmission (16) est relié au circuit applicatif (18) par une deuxième ligne de transmission (L_{OUT}), **caractérisé en ce que** le circuit de transmission (16) comprend un circuit de puits de courant (IC) adapté à tirer un premier courant (Iₜₑₛₜ) d'intensité croissante depuis la première ligne de transmission et **en ce que** le circuit de transmission (16) comprend un circuit (DECT, 30) de détermination de l'intensité maximale (I_{in,max}) du premier courant (Iₜₑₛₜ) pour laquelle la deuxième tension (V_{reg}) n'est plus régulée.

2. Système selon la revendication 1, dans lequel le circuit de régulation de tension (22) est un régulateur de tension à faible chute de tension.

3. Système selon la revendication 1 ou 2, dans lequel le circuit applicatif (18) est adapté à fonctionner selon une succession de modes de fonctionnement, la consommation électrique du circuit applicatif dans l'un des modes de fonctionnement de ladite succession étant strictement supérieure à la consommation électrique du circuit applicatif dans le mode de fonctionnement suivant de ladite succession, le circuit de transmission (16) étant, en outre, adapté à commander le fonctionnement du circuit applicatif dans le mode de fonctionnement précédant dans ladite succession lorsque la première valeur est inférieure strictement à la deuxième valeur.

4. Système selon l'une quelconque des revendications 1 à 3, dans lequel le circuit de transmission (16) est adapté à déterminer la première valeur comme le produit de la tension de référence (V_{ref}) par l'intensité maximale.

5. Système selon l'une quelconque des revendications 1 à 4, dans lequel le circuit applicatif (18) est adapté à recevoir un deuxième courant (I_{load}) et dans lequel le circuit de transmission (16) comprend un circuit de recopie (T₂) adapté à fournir un troisième courant (I_{load,test}) égal au deuxième courant (I_{load}) multiplié par un facteur de recopie.

6. Système selon la revendication 5, dans lequel le circuit de transmission (16) comprend un circuit adapté à fournir un quatrième courant (I_{comp}) égal à la différence entre le troisième courant (I_{load,test}) et le premier courant (Iₜₑₛₜ) et un circuit (COMP) de détection d'une inversion du sens du quatrième courant.

7. Système selon la revendication 6, dans lequel le circuit de transmission (16) est adapté à déterminer la deuxième valeur comme le produit du facteur de recopie, de la tension de référence (V_{ref}) et de l'intensité du premier courant (Iₜₑₛₜ) pour laquelle le sens du quatrième courant (I_{comp}) est inversé.

8. Système selon l'une quelconque des revendications 1 à 7, dans lequel la source d'énergie électrique (12) est un dispositif de conversion en énergie électrique d'une énergie choisie parmi le groupe comprenant l'énergie thermique, l'énergie vibratoire, l'énergie solaire, l'énergie éolienne et l'énergie radiofréquence.

9. Système selon l'une quelconque des revendications 1 à 8, ne comprenant pas de dispositif de stockage d'énergie ayant une capacité supérieure à 100 µF.

## Patentansprüche

1. Ein elektronisches oder elektromechanisches System (10; 100), das mindestens eine elektrische Energiequelle (12; 12_{A}, 12_{B}, 12_{C}, 12_{D}), eine erste Schaltung (18), die in der Lage ist, in mindestens zwei Betriebsarten zu arbeiten, von denen eine dem Anhalten der Anwendungsschaltung entspricht, und eine Übertragungsschaltung (16) zum Übertragen der elektrischen Energie von der Energiequelle zur Anwendungsschaltung, wobei die Übertragungsschaltung ferner in der Lage ist, einen ersten Wert der maximalen augenblicklichen elektrischen Leistung zu bestimmen, die von der Energiequelle geliefert werden kann, einen zweiten Wert der augenblicklichen elektrischen Leistung zu bestimmen, die von der Anwendungsschaltung in mindestens einer der Betriebsarten verbraucht wird, und die ersten und zweiten Werte zu speichern oder die Betriebsart der Anwendungsschaltung aus den mindestens zwei Betriebsarten auf der Grundlage der ersten und zweiten Werte auszuwählen, wobei die Übertragungsschaltung (16) eine Spannungsregelschaltung (22) aufweist, die in der Lage ist, eine erste Spannung (Vₑₕ) zu empfangen, die von der Energiequelle (12) geliefert wird, oder durch eine Leistungsumwandlungsschaltung (14), die zwischen der Energiequelle und der Übertragungsschaltung angeordnet und in der Lage ist, eine zweite Spannung (V_{reg}) zu liefern, die auf eine Referenzspannung (V_{ref}) geregelt ist und die erste Schaltung (18) versorgt, wobei die Energiequelle (12) mit der Übertragungsschaltung (16) durch eine erste Übertragungsleitung (L_{IN}) gekoppelt ist, wobei die Übertragungsschaltung (16) mit der Anwendungsschaltung (18) durch eine zweite Übertragungsleitung (L_{OUT}) gekoppelt ist, **dadurch gekennzeichnet, dass** die Übertragungsschaltung (16) eine Stromsenkenschaltung (IC) aufweist, die in der Lage ist, der ersten Übertragungsleitung einen ersten Strom (Iₜₑₛₜ) von zunehmender Stärke zu entnehmen, und dass die Übertragungsschaltung (16) eine Schaltung (DECT, 30) zur Bestimmung der maximalen Stärke (I_{in,max}) des ersten Stroms (Iₜₑₛₜ) aufweist, für den die zweite Spannung (V_{reg}) nicht mehr geregelt wird.

2. System nach Anspruch 1, wobei die Spannungsregelschaltung (22) ein Spannungsregler mit einem geringen Spannungsabfall ist.

3. System nach Anspruch 1 oder 2, wobei die Anwendungsschaltung (18) in der Lage ist, gemäß einer Folge von Betriebsarten zu arbeiten, wobei die elektrische Leistungsaufnahme der Anwendungsschaltung in einer der Betriebsarten dieser Folge größer ist als die elektrische Leistungsaufnahme der Anwendungsschaltung in der nächsten Betriebsart dieser Folge, wobei die Übertragungsschaltung (16) ferner in der Lage ist, den Betrieb der Anwendungsschaltung in der vorhergehenden Betriebsart in dieser Folge zu steuern, wenn der erste Wert kleiner als der zweite Wert ist.

4. System nach einem der Ansprüche 1 bis 3, wobei die Übertragungsschaltung (16) in der Lage ist, den ersten Wert als das Produkt aus der Referenzspannung (V_{ref}) und der maximalen Stärke zu bestimmen.

5. System nach einem der Ansprüche 1 bis 4, wobei die Anwendungsschaltung (18) in der Lage ist, einen zweiten Strom (I_{load}) zu empfangen, und wobei die Übertragungsschaltung (16) eine Kopierschaltung (T2) aufweist, die in der Lage ist, einen dritten Strom (I_{load, test}) zu liefern, der gleich dem zweiten Strom (I_{load}) multipliziert mit einem Kopierfaktor ist.

6. System nach Anspruch 5, wobei die Übertragungsschaltung (16) eine Schaltung aufweist, die in der Lage ist, eine vierten Strom (I_{comp}) zu liefern, der gleich der Differenz zwischen dem dritten Strom (I_{load,test}) und dem ersten Strom (Iₜₑₛₜ) ist, und eine Schaltung (COMP) zur Erfassung einer Umkehrung der Richtung des vierten Stroms aufweist.

7. System nach Anspruch 6, wobei die Übertragungsschaltung (16) in der Lage ist, den zweiten Wert als das Produkt des Kopierfaktors, der Referenzspannung (V_{ref}) und der Stärke des ersten Stroms (Iₜₑₛₜ) zu bestimmen, bei dem die Richtung des vierten Stroms (I_{comp}) umgekehrt wird.

8. System nach einem der Ansprüche 1 bis 7, bei dem die elektrische Energiequelle (12) eine Vorrichtung zur Umwandlung von Energie, ausgewählt aus der Gruppe bestehend aus thermischer Energie, Schwingungsenergie, Sonnenenergie, Windenergie und Radiofrequenzenergie, in elektrische Energie ist.

9. System nach einem der Ansprüche 1 bis 8, wobei das System keine Energiespeichervorrichtung mit einer Kapazität von mehr als 100 µF aufweist.

## Claims

1. An electronic or electromechanical system (10; 100) comprising at least one electrical energy source (12; 12_{A}, 12_{B}, 12_{C}, 12_{D}), a first circuit (18) capable of operating in at least two operating modes, one of which corresponds to the stopping of the application circuit, and a circuit (16) for transmitting the electrical energy from the energy source to the application circuit, the transmission circuit being further capable of determining a first value of the maximum instantaneous electric power capable of being supplied by the energy source, of determining a second value of the instantaneous electric power consumed by the application circuit in at least one of the operating modes, and of storing the first and second values or of selecting the operating mode of the application circuit from among said at least two operating modes based on the first and second values, wherein the transmission circuit (16) comprises a voltage regulation circuit (22) capable of receiving a first voltage (Vₑₕ) supplied by the energy source (12), or by a power conversion circuit (14) interposed between the energy source and the transmission circuit, and capable of supplying a second voltage (V_{reg}) regulated at a reference voltage (V_{ref}) powering the first circuit (18), wherein the energy source (12) is coupled to the transmission circuit (16) by a first transmission line (L_{IN}), wherein the transmission circuit (16) is coupled to the application circuit (18) by a second transmission line (L_{OUT}), **characterized in that** the transmission circuit (16) comprises a current sink circuit (IC) capable of drawing a first current (Iₜₑₛₜ) of increasing intensity from the first transmission line and **in that** the transmission circuit (16) comprises a circuit (DECT, 30) of determination of the maximum intensity (I_{in,max}) of the first current (Iₜₑₛₜ) for which the second voltage (V_{reg}) is no longer regulated.

2. The system of claim 1, wherein the voltage regulation circuit (22) is a voltage regulator having a low voltage drop.

3. The system of claim 1 or 2, wherein the application circuit (18) is capable of operating according to a succession of operating modes, the electric power consumption of the application circuit in one of the operating modes of said succession being greater than the electric power consumption of the application circuit in the next operating mode of said succession, the transmission circuit (16) being further capable of controlling the operation of the application circuit in the previous operating mode in said succession when the first value is smaller than the second value.

4. The system of any of claims 1 to 3, wherein the transmission circuit (16) is capable of determining the first value as being the product of the reference voltage (V_{ref}) by the maximum intensity.

5. The system of any of claims 1 to 4, wherein the application circuit (18) is capable of receiving a second current (I_{load}) and wherein the transmission circuit (16) comprises a copying circuit (T₂) capable of supplying a third current (I_{load,test}) equal to the second current (I_{load}) multiplied by a copying factor.

6. The system of claim 5, wherein the transmission circuit (16) comprises a circuit capable of supplying a fourth current (I_{comp}) equal to the difference between the third current (I_{load,test}) and the first current (Iₜₑₛₜ) and a circuit (COMP) of detection of an inversion of the direction of the fourth current.

7. The system of claim 6, wherein the transmission circuit (16) is capable of determining the second value as being the product of the copying factor, of the reference voltage (V_{ref}), and of the intensity of the first current (Iₜₑₛₜ) for which the direction of the fourth current (I_{comp}) is inverted.

8. The system of any of claims 1 to 7, wherein the electrical energy source (12) is a device of conversion into electrical energy of energy selected from the group comprising thermal energy, vibratory energy, solar energy, wind energy, and radio frequency energy.

9. The system of any of claims 1 to 8, comprising no energy storage device having a capacitance greater than 100 µF.
